# EUROPÄISCHE PATENTSCHRIFT

(11) **EP 1 683 904 B1**
(45) Veröffentlichungstag und Bekanntmachung des Hinweises auf die Patenterteilung: **25.09.2013**
(21) Anmeldenummer: 05110806.6
(22) Anmeldetag: 16.11.2005
(51) Int. Cl.: D06F 39/08, G05D 23/13

(54) **Verfahren zur Regelung der Temperatur von Mischwasser**
Method for controlling the temperature of mixed water
Procédé pour contrôler la temperature d'eaux mélangeés

(30) Priorität: 25.01.2005 DE 102005003451
(43) Veröffentlichungstag der Anmeldung: 26.07.2006
(73) Patentinhaber: BSH Bosch und Siemens Hausgeräte GmbH, 81739 München (DE)
(72) Erfinder: Wiemer, Horst, 14532, Kleinmachnow (DE)

(56) Entgegenhaltungen:
- WO-A-03/097922
- DE-A1- 19 637 610
- DE-A1- 19 717 449
- GB-A- 1 425 326
- US-A- 4 420 811
- US-A- 5 439 019
- US-B1- 6 382 517
- US-B1- 6 499 321

## Beschreibung

Die Erfindung betrifft ein Verfahren zur Regelung der Temperatur von Mischwasser, das aus getrennten Kalt- und Warmwasserzuläufen gespeist wird, bei welchem Verfahren beim Start des Wasserzulaufs das Regelungssystem so eingestellt wird, dass der Kaltwasserzulauf gesperrt und der Warmwasserzulauf vollständig geöffnet ist, und während des Wassereinlasses die Regelung der Mischwassertemperatur bei Überschreitung des vorbestimmten Sollwertes in der Weise erfolgt, dass die Menge des zufließenden Warmwassers gedrosselt und der Kaltwasserzulauf partiell erhöht wird, und dass bei Erreichen der Solltemperatur im Mischwasser die Mengen der beiden zulaufenden Teilströme konstant gehalten werden. Das Verfahren ist insbesondere anwendbar für programmgesteuerte Haushaltgeräte wie Wasch- und Geschirrspülmaschinen.

Ein solches Verfahren geht aus der GB 1 425 326 A hervor.

Um die Vorteile einer zentralen Warmwasserbereitung in Bezug auf Heizkostensenkung sowie Verkürzung der Programmdauer effektiv auszunutzen, sind Geräte entwickelt worden, die je einen Anschluss für Kalt- und Warmwasser aufweisen und den Einlauf aus den beiden Wasseranschlüssen so steuern, dass das erzeugte Mischwasser im Reservoir genau die gewünschte Temperatur hat, beispielsweise die gewünschten 30°C Waschtemperatur in einem Laugenbehälter. Die Einstellung des Mischwassers auf eine vorbestimmte Temperatur kann in einfachster Weise über zwei in den beiden Zuleitungen angeordnete programmgesteuerte Sperrventile realisiert werden. Die Ventile werden zeitgetaktet geschaltet, so dass wechselseitig kaltes und warmes Wasser einfließt. Die Mischwassertemperatur wird über einen im Wasserreservoir angeordneten Thermosensor überwacht, dessen Messdaten zur Steuerung der Ventile dienen. Dieses einfache Verfahren ist sehr ungenau in Bezug auf die Temperaturregelung und führt in der Regel zu einem erhöhten Wasser- oder Energieverbrauch. Der wesentliche Nachteil besteht jedoch darin, dass zeitweilig Wasser mit hoher Temperatur einläuft. Dies kann dazu führen, dass im Falle einer Waschmaschine empfindliche Textilien Schaden nehmen.

Aus DE 197 17 449 A1 ist ein Waschautomat bekannt, bei dem die Schaltventile über einen auf unterschiedliche Temperaturen einstellbaren Thermostaten gesteuert werden. Der Thermostat schaltet das Warmwasserventil beim Überschreiten der vorgegebenen Temperatur ab, das Kaltwasserventil kann unabhängig vom Schaltzustand des Thermostaten in Öffnungsstellung gebracht werden, oder es kann unabhängig vom Warmwasserzulauf ansteuerbar sein. Nachteilig ist bei dieser Lösung, dass der Wassereinlauf in mehreren Füllschritten erfolgt und in der Regel ein Nachheizen nach Abschluss des Einlassvorganges erforderlich ist. Die in der DE 196 37 610 A1 beschriebene Lösung sieht vor, den ventilgesteuerten Kalt- und Warmwassereinläufen in Fließrichtung einen Mischraum nachzuordnen. Dieser Raum fungiert als Zwischenspeicher, bevor das Mischwasser in den Laugenbehälter weitergeleitet wird. Im Mischbehälter ist ein Thermosensor angeordnet, dessen Messdaten an die Steuerelektronik übertragen werden. Diese Lösungsvariante sichert einen Zulauf von Mischwasser mit nahezu konstanten Temperaturen.

Bei den beschriebenen Verfahren erfolgt die Regelung zwischen zwei Temperaturniveaus. Die Genauigkeit, mit der die Mischwassertemperatur eingestellt werden kann, hängt davon ab, wie dicht die Schaltniveaus zusammenliegen. Eine Steigerung der Genauigkeit ist bei dieser Art der Regelung nur mit höherem Zeitaufwand und einem erheblichen Mehraufwand bei der Steuerung und/oder bei der mechanischen Umsetzung erzielbar.

Der Nachteil der bekannten Lösungen mit im Wechsel getakteten Wassereinläufen kann vermieden werden durch die Verwendung eines mechanischen Stellglieds, das die Durchflussmengen von Kalt- und Warmwasser durch kontinuierliches Vergrößern bzw. Verkleinern der beiden Einlassöffnungen regelt. Mit dieser mechanisch geregelten Mischwasserzufuhr ist ein kontinuierlicher und damit schneller Wassereinlauf möglich. Der Aufwand für diese Art der Regelung ist aber sehr hoch, insbesondere für den Antrieb des Stellgliedes.

Der Erfindung liegt die Aufgabe zugrunde, ein Verfahren zur Realisierung dieses Verfahrens anzugeben, womit ein Behälter kontinuierlich mit Mischwasser aus getrennten Kalt- und Warmwasserzuleitungen binnen kurzer Zeit befüllt wird und die Temperatur des Mischwassers während des Einspeisungsvorganges möglichst konstant auf einem vom Programm oder Nutzer vorbestimmten Wert gehalten wird. Der Ablauf des Verfahrens soll einfach und gegenüber möglichen Störfaktoren unempfindlich sein. Ein wesentliches Ziel der Erfindung besteht darin, dass die Vorrichtung zur Umsetzung des Verfahrens unkompliziert und kostengünstig produziert werden kann.

Die Aufgabe der Erfindung wird durch die in Anspruch 1 genannten Merkmale gelöst. Vorteilhafte Ausgestaltungen der Erfindung sind in den Unteransprüchen enthalten.

Gemäß dem erfindungsgemäßen Verfahren läuft der Regelvorgang immer nur in einer Richtung ab: von höheren zu niedrigeren Temperaturwerten. Bei zunächst ausschließlicher Warmwasserzufuhr wird nach Überschreiten des eingestellten Sollwertes die Menge des einfließenden Warmwassers gedrosselt und die Zufuhr von Kaltwasser stetig erhöht. Die Temperatur des Mischwassers wird nach unten geregelt, bis der Sollwert erreicht ist. Der Regelprozess ist abgeschlossen, wenn die Temperatur des einlaufenden Warmwassers nicht mehr steigt, also die Betriebstemperatur des Warmwassersystems erreicht hat und wenn durch den Zulauf von Kaltwasser die Temperatur des Mischwassers auf ihren Sollwert herunter geregelt ist. Bei einem Unterschreiten der eingestellten Solltemperatur im Mischwasser wird der Zulauf von Kalt- und Warmwasser gestoppt und anschließend der Regelprozess unter Ausgangsbedingungen, d.h. bei maximalem Warmwasserzulauf und gesperrtem Kaltwasserzulauf, erneut gestartet.

Realisiert wird das Verfahren durch einen Regler mit getrennten Zulaufleitungen für Kalt- und Warmwasser und mit einem mechanischen Stellglied, durch welches die Zulaufleitungen stetig geöffnet bzw. verschlossen werden. Wesentliches Merkmal des Reglers besteht darin, dass das mechanische Stellglied nur in einer Richtung bewegt wird.

Zu Beginn des Wassereinlaufs ist die Warmwasserleitung voll geöffnet und die Kaltwasserleitung gesperrt. Zur Regelung der Mischwassertemperatur wird das Stellglied so in Bewegung gesetzt, dass die Öffnung der Warmwasserleitung stetig geschlossen und die der Kaltwasserleitung stetig geöffnet wird. Das Stellglied wird angehalten, wenn die Solltemperatur erreicht ist. Nach Abschluss der Regelung werden die Öffnungen der Zuleitungen nicht mehr verändert, das Stellglied nimmt dann eine Position ein, die, stabile Bedingungen bei der Wasserzufuhr vorausgesetzt, bis zum Ende des Einlassvorgangs unverändert beibehalten wird.

Damit entfällt die Notwendigkeit, eine Nachregelung vornehmen zu müssen oder eine Regelung in Intervallen zwischen einem oberen und einem unteren Grenzwert. Der einfache, nur in eine Richtung wirkende Regelmechanismus des erfindungsgemäßen Verfahrens ist mit geringem regelungstechnischen Aufwand zu realisieren. Für den praktischen Betrieb, beispielsweise für den einer Waschmaschine, sind die mit dem Verfahren erzielbaren Parameter völlig ausreichend, die Wassertemperatur im Laugenbehälter ist in engen Toleranzen einstellbar und auch ausreichend genau reproduzierbar. Das Befüllen des Laugenbehälters mit Mischwasser ist in kurzer Zeit möglich, da der Vorgang gemäß der Erfindung ohne Unterbrechung abläuft. Vorteilhaft ist auch, dass das Mischwasser, abgesehen von einer kurzen Startphase, mit nahezu konstanter Temperatur einfließt. Beschädigungen von temperaturempfindlichen Textilien durch Kontakt mit zu warmem Wasser sind ausgeschlossen. Ein wesentlicher Vorteil des erfindungsgemäßen Verfahrens besteht darin, dass es sehr kostengünstig umsetzbar ist. Es kann insbesondere auf ein einfaches mechanisches Regelsystem zurückgegriffen werden, das mit einem Antrieb ohne Richtungsumkehr ausgestattet ist.

Die Erfindung soll nachstehend anhand eines in der Zeichnung dargestellten Ausführungsbeispiels erläutert werden. Es zeigen
- Fig. 1: ein Temperatur/Zeit-Diagramm beim Befüllen einer Waschmaschine gemäß dem Verfahren nach der Erfindung und
- Fig. 2: eine Regler, durch den das erfindungsgemäße Verfahren realisiert werden kann.

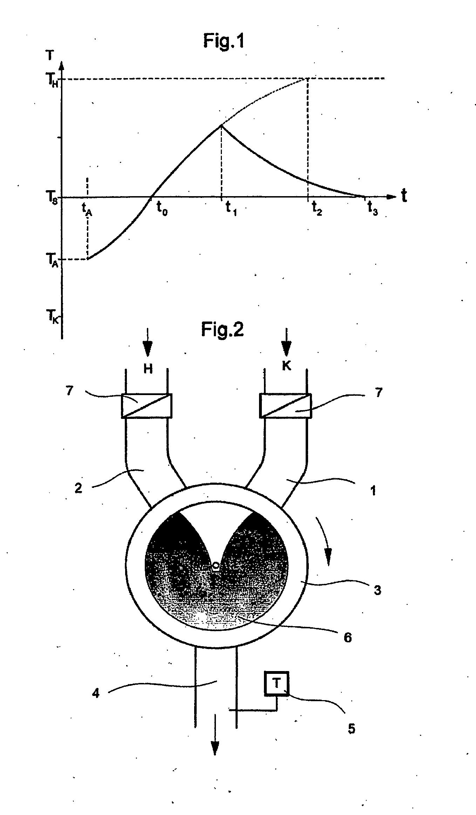

Der erfindungsgemäße Verfahrensablauf ist anhand des als Fig. 1 bezeichneten Diagramms beschrieben. Dabei wird beispielsweise Bezug genommen auf den Betrieb einer Waschmaschine. Im Diagramm ist der Temperaturverlauf des nach Maßgabe des erfindungsgemäßen Verfahrens erzeugten Mischwassers dargestellt. Dabei bedeuten T_{H} die Betriebstemperatur des Warmwassersystems und T_{K} die Temperatur des Kaltwassers, die als konstant angenommen wird. Zwischen diesen Niveaus liegend bezeichnet T_{S} die vom Programm oder Nutzer vorgegebene und mittels des erfindungsgemäßen Verfahrens einzustellende Solltemperatur des Mischwassers.

Bei Anforderung von Warmwasser, beispielsweise für den Hauptwaschgang einer Waschmaschine, beginnt der Prozess zum Startzeitpunkt t_{A} mit der maximal möglichen Warmwasserzufuhr bei gleichzeitiger Sperrung der Kaltwasserzufuhr. In der Regel wird das Wasser aus dem Warmwasseranschluss nicht sofort mit der Betriebstemperatur T_{H} des Warmwasserversorgungssystem einströmen. Durch diskontinuierliche Wasserentnahme und dadurch verursachtes längeres Stehen im Hauswassernetz kühlt sich das Wasser ab und läuft zunächst mit einer niedrigen, undefinierten Temperatur ein. Gemäß dem im Diagramm dargestellten Beispiel soll die Anfangstemperatur des Warmwassers T_{A} unterhalb des Sollwertes T_{S} liegen. In Abhängigkeit von der Länge der Zuführungsleitungen, ihrer Isolierung und der Häufigkeit von Warmwasserentnahmen wird die Temperatur des einlaufenden Wassers erst nach einer gewissen Zeitspanne die Betriebstemperatur T_{H} des Warmwasserversorgungssystems erreichen. Auf der Zeitachse des Diagramms bezeichnet t₂ diesen Zeitpunkt. Die Erfindung geht davon aus, dass bis dahin die Temperatur des einströmenden Wassers stetig steigt. Der Temperaturanstieg wird messtechnisch erfasst und die Messdaten einem intelligenten Auswertesystem zugeführt. Die Regelung setzt ein, wenn die Temperatur des einfließenden Warmwassers einen Wert oberhalb des vorgegebenen Sollwertes T_{S} erreicht hat.

Wegen der Trägheit des Systems wird der Beginn der Regelung etwas verzögert. Im Diagramm ist diese Zeitverzögerung ablesbar als die Zeitdifferenz zwischen t₀ und t₁. Eine wesentliche Aufgabe bei der technischen Umsetzung des Verfahrens ist es, diese Zeitspanne zwischen dem theoretisch frühest möglichen und dem praktisch realisierbaren Zeitpunkt für den Beginn der Regelung möglichst klein zu halten.

Ab dem Zeitpunkt t₁ wird vom System die Warmwasserzufuhr stetig gedrosselt und die Kaltwasserzufuhr kontinuierlich erhöht. Der Regelvorgang ist abgeschlossen, wenn das einfließende Warmwasser die Betriebstemperatur T_{H} erreicht hat und die Mengenströme des Kaltwassers und des Warmwassers so aufeinander abgestimmt sind, dass die Temperatur des Mischwassers auf seinen Sollwert T_{S} eingestellt ist. Von diesem Zeitpunkt t₃ an werden die einfließenden Kalt- und Warmwassermengen konstant gehalten.

In Fig. 2 ist der Regler für die Erzeugung von Mischwasser mit einer vorbestimmten Temperatur nach Maßgabe des erfindungsgemäßen Verfahrens schematisch dargestellt. Das zylindrische Gehäuse 3 des Reglers weist zwei Einlasskanäle 1 und 2 auf, je einen für den Kalt- und den Warmwasseranschluss sowie einen Anschluss 4 für das abzuführende Mischwasser. In der Darstellung der Fig. 2 sind die Einlassöffnungen gleich groß. Es kann vorteilhaft sein, den Einlass für das Warmwasser 2 größer auszulegen, um einen gewissen Ausgleich für den geringeren Wasserdruck im Warmwassersystem zu schaffen.

Die Wasserführung innerhalb des mechanischen Reglers ist in der Zeichnung vereinfacht dargestellt, auf konstruktive Einzelheiten, insbesondere auf solche die einer schnellen Durchmischung der Wasserströme dienen, wurde verzichtet. Die Auslassöffnung 4 ist bei jeder Zwischenstellung des Drehschiebers 6 vollständig geöffnet. Dadurch kann der Mischwasserstrom seinem Bestimmungsort, beispielsweise dem Laugenbehälter einer Waschmaschine, kontinuierlich zugeführt werden. In das Reglergehäuse nahe der Auslassöffnung oder im Auslaufanschluss 4 ist ein Thermosensor 5 integriert. Die Anordnung des Thermosensors 5 innerhalb des Reglergehäuses gestattet die Erfassung der Temperatur unmittelbar an der Stelle, wo die Wasserströme aus der Kalt- und der Warmwasserleitung 1, 2 vermischt und in einer gemeinsamen Abflussleitung 4 abgeleitet werden. Dies bietet den Vorteil, die Temperatur des Mischwassers als Steuergröße zu einem sehr frühen Zeitpunkt zu erfassen. Die Trägheit des mechanischen Regelsystems und die sich daraus ergebenden möglichen Fehler können somit minimiert werden.

Das mechanische Stellglied 6 ist ein Drehschieber, der in das Gehäuse 3 dichtend eingepasst ist und in diesem drehbar gelagert ist. Als Antrieb für den Drehschieber 6 dient ein in der Zeichnung nicht dargestellter Synchronmotor. Nach Maßgabe der Erfindung wird der als Stellglied 6 wirkende Drehschieber nur in eine Richtung bewegt. Dies wird in der Zeichnung durch den Pfeil dargestellt. Der Anfangszustand der Wassereinleitung ist dadurch bestimmt, dass nur Warmwasser mit der maximal möglichen Menge einläuft. Der Drehschieber 6 nimmt zu Beginn des Vorganges eine Position ein, bei der der Warmwasserzulauf 2 vollständig geöffnet und der Kaltwasseranschluss 1 gesperrt ist. Wird vom Thermosensor 5 eine Temperatur über den Sollwert T_{S} registriert, setzt der Regelprozess ein, wobei über ein intelligentes Auswertesystem Steuerimpulse erzeugt werden, die das Stellglied 6 in der Weise manipulieren, dass die Kaltwasserzuführung 1 partiell geöffnet wird bei gleichzeitig verringerter Zuführung von Warmwasser. Dazu wird der Drehschieber 6 durch den nicht dargestellten Antrieb in Bewegung versetzt. Die Drehbewegung des Stellgliedes 6 in Pfeilrichtung bewirkt ein kontinuierliches Verschließen der Warmwasserzuleitung 2 und zugleich ein stetiges Öffnen des Kaltwasserzulaufs 1. Der Drehschieber 6 wird angehalten, wenn die Temperatur des Mischwassers den vorgegebenen Sollwert T_{S} erreicht hat. Steigt die Temperatur weiterhin an, weil am Warmwassereinlauf 2 die Betriebstemperatur T_{H} noch nicht erreicht ist, wird über seinen Antrieb der Drehschieber 6 in Pfeilrichtung erneut in Bewegung gesetzt. Nach dem Erreichen der Betriebstemperatur zum Zeitpunkt t₂ und dem Ende der Regelung zum Zeitpunkt t₃ werden die Öffnungen der Zuleitungen 1 und 2 nicht mehr verändert. Der Drehschieber 6 stellt sich auf eine Position ein, die, stabile Bedingungen bei der Wasserzufuhr vorausgesetzt, bis zum Ende der Mischwasserzufuhr unverändert bleibt.

Der Regelvorgang läuft immer nur in einer Richtung ab, bei Überschreiten des eingestellten Sollwertes wird die Temperatur des Mischwassers nach unten geregelt. Dazu muss der als Stellglied wirkende Drehschieber 6 nur in eine Richtung bewegt werden, eine Drehrichtungsumkehr ist nicht erforderlich, entsprechend kann als Antrieb für den Drehschieber 6 ein einfacher Synchronmotor eingesetzt werden. Das gegensinnige Öffnen bzw. Verschließen der Einlassöffnungen 1 und 2 durch nur eine Drehbewegung des Stellgliedes 6 bewirkt, dass die Solltemperatur für das Mischwasser in einer für mechanische Regler sehr kurzen Zeit eingestellt werden kann.

Um die Betriebssicherheit des Verfahrens und des dieses Verfahren realisierenden Reglers zu verbessern, sind in Ausgestaltung der Erfindung Regeln vorgesehen, die mögliche Störfaktoren kompensieren. Als Störfaktoren sollen in diesem Zusammenhang solche Ereignisse und Zustände verstanden werden, die dazu führen können, dass das Mischwasser nach dem Beenden des erfindungsgemäß geregelten Zulaufs an seinem Bestimmungsort nicht die vorbestimmte Temperatur hat bzw. diese außerhalb zulässiger Toleranzen liegt.

In der Praxis sind zwei mögliche Störungen besonders wichtig. Das betrifft zum einen den sehr langsamen Anstieg der Warmwassertemperatur zu Beginn des Einlasses, und zum anderen das Absinken der Mischwassertemperatur, nachdem die Regelung abgeschlossen ist (nach t₃).

Ein verlangsamtes Ansteigen des einlaufenden Warmwassers kann dazu führen, dass eine zu große Menge untertemperierten Wassers eingeleitet wird. Um dafür einen Ausgleich zu schaffen, ist vorgesehen, den Anstieg der Temperatur des einlaufenden Warmwassers über die Zeit bis zum Erreichen der Solltemperatur von t_{A} bis t₀ zu erfassen. In Abhängigkeit von den gewonnenen Messdaten wird die Regelung der Mischtemperatur nach Überschreiten der Solltemperatur T_{H} um eine intern berechnete Zeitspanne verzögert, d.h. die immer vorhandene, trägheitsbedingte Zeitdifferenz t₁ - t₀ wird rechnergesteuert zwecks Ausgleichsregelung verlängert. In der Praxis ist es zumeist ausreichend, lediglich die Zeit bis zum Erreichen der Solltemperatur (t₀ - t_{A}) des einlaufenden Warmwassers zu erfassen, um daraus den Korrekturwert für die verzögerte Regelung zu bestimmen.

Als Störfall gilt auch, wenn entgegen der eingangs gemachten Annahme die Temperatur des Warmwassers während des Zulaufs absinkt. Störungen dieser Art können durch Ausfälle im externen Heizsystem oder durch Defekte in den Leitungen hervorgerufen werden. Häufiger wird der Fall eintreten, dass der Druck in der Warmwasserleitung durch vorübergehend sehr starke Wasserentnahme an verschiedenen Zapfstellen absinkt. Aus einem solchen Druckabfall ergibt sich dann bei weiterhin konstantem Druck in der Kaltwasserleitung ein Absinken der Mischwassertemperatur. Da gemäß der Erfindung die Mischwassertemperatur nur zu niedrigen Werten geregelt werden kann, ist in Ausgestaltung der Erfindung vorgesehen, den Vorgang abzubrechen und unter Ausgangsbedingungen neu zu starten.

Dazu werden zunächst die Einlasskanäle 1, 2 über die beiden Sperrventile 7 verschlossen, das Stellglied 6 in Pfeilrichtung bis in die Ausgangsposition gedreht und anschließend die Einlasskanäle 1, 2 erneut geöffnet. Der Wasserzulauf wird fortgesetzt bei geschlossenem Kaltwasseranschluss 1 und maximal geöffnetem Warmwasserzulauf 2. Danach läuft der Prozess so ab wie oben beschrieben.

Hat der Auffangbehälter für das Mischwasser eine eigene Heizung, dann kann natürlich alternativ auch die Heizung eingeschaltet werden, um die fehlende Wärme im Mischwasser nachzuliefern.

Die beschriebenen Maßnahmen zur Kompensation von Störungen sichert ab, dass der Prozess ohne Nachregelung immer in einer Richtung gesteuert werden kann und das Stellglied für den Regelvorgang nur in eine Richtung bewegt werden muss. Damit kann als Antrieb für das Stellglied in sehr einfacher Weise ein Synchronmotor ohne Drehrichtungsumkehr eingesetzt werden.

Um nicht Gefahr zu laufen, dass jedes kurzzeitige Absinken der Temperatur zu einer Unterbrechung des Einlasses mit nachfolgendem Neustart des Vorganges führt, ist eine Verzögerungszeitspanne vorgesehen, die überschritten werden muss, bevor die Abschaltung erfolgt. Diese Zeitspanne kann fest vorgegeben im Speicher hinterlegt sein oder durch das intelligente Auswertesystem berechnet werden, unter Berücksichtigung betriebsbedingter Parameter wie Höhe der Temperaturabsenkung, Gesamteinlassmenge oder Durchfluss pro Zeiteinheit.

Die andere Möglichkeit, dass die Temperatur oder der Druck des zulaufenden Warmwassers nach der Einstellung der Mischwassertemperatur auf ihren Sollwert noch einmal ansteigt, wird vom System nicht als Störung interpretiert, sondern als Regelfall, der in der beschriebenen Weise abläuft, also als Korrektur der Mischwassertemperatur nach unten realisiert durch eine entsprechende Korrekturbewegung des Drehschiebers 6.

Der Fall, dass die vorgegebene Solltemperatur T_{S} vom einlaufenden Warmwasser nicht erreicht wird, interpretiert das Regelsystem ebenso nicht als Störfall. Unter diesen Bedingungen bleibt über dem gesamten Einfüllvorgang die Kaltwasserleitung 1 gesperrt, der Einfüllvorgang läuft allein über den Warmwasserzulauf 2. Das dann notwendige Aufheizen der eingelassene Wassermenge im Laugenbehälter von der Warmwassertemperatur auf die Solltemperatur T_{S} und die messtechnische Kontrolle des Aufheizens erfolgen in bekannter Weise.

Die Erfindung bietet den weiteren Vorteil, dass mögliche Störungen durch einfach zu realisierende Kompensationen in ausreichendem Maße abgefangen werden können. Die beschriebenen Regeln zur Kompensation von möglichen Störungen sichern ab, dass die vorbestimmten Mischwassertemperaturen mit einer für die Praxis ausreichenden Toleranz eingehalten werden können.

## Patentansprüche

1. Verfahren zur Regelung der Temperatur (T) von Mischwasser, das aus getrennten Kalt- und Warmwasserzuläufen (1, 2) gespeist wird, bei welchem Verfahren beim Start des Wasserzulaufs das Regelungssystem (1 bis 6) so eingestellt wird, dass der Kaltwasserzulauf (1) gesperrt und der Warmwasserzulauf (2) vollständig geöffnet ist, und während des Wassereinlasses die Regelung der Mischwassertemperatur (T) bei Überschreitung des vorbestimmten Sollwertes (T_{S}) in der Weise erfolgt, dass die Menge des zufließenden Warmwassers gedrosselt und der Kaltwasserzulauf partiell erhöht wird, und dass bei Erreichen der Solltemperatur (T_{S}) im Mischwasser die Mengen der beiden zulaufenden Teilströme konstant gehalten werden, **dadurch gekennzeichnet, dass** bei einem Unterschreiten der eingestellten Solltemperatur (T_{S}) im Mischwasser der Zulauf von Kalt- und Warmwasser (K, W) gestoppt und anschließend der Regelprozess unter Ausgangsbedingungen, d.h. bei maximalem Warmwasserzulauf (1) und gesperrtem Kaltwasserzulauf (2), erneut gestartet wird.

2. Verfahren nach Anspruch 1, **dadurch gekennzeichnet, dass** vom Regelungssystem (1 bis 6) der Anstieg der Temperatur (T) des einlaufenden Warmwassers über die Zeit (t₃ - t_{A}) bis zum Erreichen der Solltemperatur (T_{S}) erfasst wird, und dass in Abhängigkeit von diesem Wert die Regelung der Mischtemperatur nach Überschreiten der Solltemperatur (T_{S}) um eine intern berechnete Zeitspanne verzögert wird.

3. Verfahren nach Anspruch 1, **dadurch gekennzeichnet, dass** vom Regelungssystem (1 bis 6) die Zeit (t₃ - t_{A}) bis zum Erreichen der Solltemperatur (T_{S}) des einlaufenden Warmwassers erfasst wird, und dass in Abhängigkeit von diesem Wert die Regelung der Mischtemperatur nach Überschreiten der Solltemperatur (T_{S}) um eine intern berechnete Zeitspanne verzögert wird.

4. Verfahren nach Anspruch 1, **dadurch gekennzeichnet, dass** der Stopp und der anschließende Neustart des Regelprozesses um eine im Programmspeicher fest hinterlegte Zeitspanne oder um eine Zeitspanne verzögert wird, die unter Berücksichtigung betriebsbedingter Parameter wie Höhe der Temperaturabsenkung, Gesamteinlassmenge oder Durchfluss pro Zeiteinheit intern berechnet wird.

## Claims

1. Method for regulating the temperature (T) of mixed water supplied from separate cold water and hot water feeds (1, 2), in which method the regulating system (1 to 6) is so set at the start of the water supply that the cold water feed (1) is blocked and the hot water feed (2) is completely opened and during the water entry the regulation of the mixed water temperature (T) is carried out in such a manner when the predetermined target value (T_{S}) is exceed that the quantity of inflowing hot water is throttled and the cold water supply partially increased and that when the target temperature (T_{S}) in the mixed water is reached the quantities of the two inflowing part flows are kept constant, **characterised in that** when the set target temperature (T_{S}) in the mixed water is fallen below the supply of cold water and hot water (K, W) is stopped and subsequently the regulating process is restarted under initial conditions, i.e. with maximum hot water feed (1) and blocked cold water feed (2).

2. Method according to claim 1, **characterised in that** the rise of the temperature (T) of the entering hot water over time (t₃ - t_{A}) until reaching the target temperature (T_{S}) is detected by the regulating system (1 to 6) and that in dependence on this temperature the regulation of the mixed temperature after exceeding the target temperature (T_{S}) is delayed by an internally calculated time period.

3. Method according to claim 1, **characterised in that** the time (t₃ - t_{A}) until reaching the target temperature (T_{S}) of the entering hot water is detected by the regulating system (1 to 6) and that in dependence on this value the regulation of the mixed temperature after exceeding the target temperature (T_{S}) is delayed by an internally calculated time period.

4. Method according to claim 1, **characterised in that** the stop and subsequent restart of the regulating process is delayed by a time period fixedly filed in the program memory or by a time period which is internally calculated with consideration of operationally dependent parameters such as the extent of the drop in temperature, total inlet quantity or throughflow per unit of time.

## Revendications

1. Procédé destiné à réguler la température (T) d'eau mixte qui est alimentée à partir d'arrivées séparées d'eau froide et d'eau chaude (1, 2), dans lequel procédé, au départ de l'arrivée d'eau, le système de régulation (1 à 6) est réglé de manière à ce que l'arrivée d'eau froide (1) soit fermée et l'arrivée d'eau chaude (2) soit complètement ouverte, et dans lequel pendant l'admission d'eau la régulation de la température d'eau mixte (T), en cas de dépassement de la valeur théorique prédéterminée (T_{S}), est réalisée de manière à ce que la quantité d'eau chaude affluant soit restreinte et que l'arrivée d'eau froide soit partiellement augmentée, et que, lorsque la température théorique (T_{S}) est atteinte dans l'eau mixte, les quantités des deux flux partiels affluant soient maintenues de manière constante, **caractérisé en ce que** lors d'un dépassement vers le bas de la température théorique réglée (T_{S}) dans l'eau mixte, l'arrivée d'eau froide et d'eau chaude (K, W) est arrêtée et qu'ensuite le processus de régulation est de nouveau démarré dans les conditions initiales, c'est-à-dire avec l'arrivée d'eau chaude maximale (1) et l'arrivée d'eau froide fermée (2).

2. Procédé selon la revendication 1, **caractérisé en ce que** l'augmentation de la température (T) de l'eau chaude entrant est enregistrée par le système de régulation (1 à 6) pendant le temps (t₃ - t_{A}) jusqu'à obtention de la température théorique (T_{S}), et **en ce qu'**en fonction de cette valeur, la régulation de la température mixte, après le dépassement de la température théorique (T_{S}), est retardée d'une période de temps calculée de manière interne.

3. Procédé selon la revendication 1, **caractérisé en ce que** le temps (t₃ - t_{A}) jusqu'à l'obtention de la température théorique (T_{S}) de l'eau chaude entrant est enregistré par le système de régulation (1 à 6), et **en ce qu'**en fonction de cette valeur la régulation de la température mixte, après le dépassement de la température théorique (T_{S}), est retardée d'une période de temps calculée de manière interne.

4. Procédé selon la revendication 1, **caractérisé en ce que** l'arrêt et le redémarrage suivant du processus de régulation sont retardés d'une période de temps mémorisée de manière fixe dans la mémoire programme ou d'une période de temps qui est calculée de manière interne en tenant compte de paramètres de fonctionnement, tels que la hauteur de la baisse de température, la quantité d'admission totale ou le débit par unité de temps.
